# EUROPÄISCHE PATENTSCHRIFT

(11) **EP 2 087 820 B1**
(45) Veröffentlichungstag und Bekanntmachung des Hinweises auf die Patenterteilung: **11.08.2010**
(21) Anmeldenummer: 08021980.1
(22) Anmeldetag: 18.12.2008
(51) Int. Cl.: A47J 31/42

(54) **Kaffeebohnenbehälter für eine Kaffeemühle und Kaffeemaschine mit einem solchen Kaffeebohnenbehälter**
Coffee bean container for a coffee grinder and coffee machine with such a coffee bean container
Récipients de grains de café pour un moulin à café et machine à café dotée d'un tel récipient de grains de café

(30) Priorität: 07.02.2008 DE 202008001749 U
(43) Veröffentlichungstag der Anmeldung: 12.08.2009
(73) Patentinhaber: Eugster/Frismag AG, 8590 Romanshorn (CH)
(72) Erfinder: Irmscher, Dirk, 8580 Amriswil (CH); Erni, Alain, 9200 Gossau (CH)
(74) Vertreter: Schubert, Siegmar

(56) Entgegenhaltungen:
- EP-A- 0 380 450
- EP-A- 1 440 642
- EP-A- 1 597 991
- DE-A1- 3 142 348
- DE-C- 451 326
- US-A- 5 458 295
- US-A- 5 845 857

## Beschreibung

Die Erfindung betrifft einen Kaffeebohnenbehälter nach dem Oberbegriff des Anspruchs 1.

Nach einem weiteren Aspekt der Erfindung betrifft diese eine Kaffeemaschine, insbesondere einen Espressovollautomaten, mit integrierter Kaffeemühle und einem Kaffeebohnenbehälter.

In Kaffeemaschinen, insbesondere Espressovollautomaten, mit integrierten Kaffeemühlen werden zunehmend Kaffeemühlen mit jeweils einem Kaffeebohnenbehälter eingesetzt, der zwei getrennte Bohnenkammern für zwei unterschiedliche Kaffeebohnensorten aufweist.

Ein solcher bekannter Kaffeebohnenbehälter einer Kaffeemühle ist mit zwei Fächern und einem unterseitigen, für beide Fächer gemeinsamen Ausgabeschacht und mit einem Verschlusselement ausgebildet, mit dem jeweils der Ausgang zumindest eines Fachs wahlweise verschließbar ist (EP-A-1 440 642). Unterhalb des Ausgabeschachts ist ein Mahlwerk angeordnet, das mit dem Verschlusselement zum wahlweisen Verschließen des Ausgangs zumindest eines Fachs eine Einheit bildet. Da Ausgabeöffnungen der Fächer zwischen Stegen eines Leitkonus gebildet sind, der sich nach unten in dem Kaffeebohnenbehälter verbreitert, und da das Verschlusselement der Kontur der Unterseite des Leitkonus entspricht, können sich Kaffeebohnen bzw. Bruchstücke von Kaffeebohnen, die in den Bohnenkammern des Kaffeebohnenbehälters bevorratet sind, zwischen jeweils einem der Stege des Leitkonus und einem der Stege des Verschlusselements einklemmen. Der Kaffeebohnenbehälter ist gegenüber der aus dem Verschlusselement und dem Mahlwerk gebildeten Einheit drehbar angeordnet, um auch bei Vorhandensein von Kaffeebohnen zwischen dem Verschlusselement und der Ausgabeöffnung eines der Fächer eine Fachauswahl durch Drehen des Kaffeebohnenbehälters aufgrund der großen Hebelwirkung durch den drehbaren Kaffeebohnenbehälter zu ermöglichen, wenn also die Drehbewegung zwischen dem Verschlusselement und der Ausgabeöffnung eines Fachs erschwert ist. Hierzu muss allerdings der Kaffeebohnenbehälter fest, am besten mit zwei Händen angefasst und verdreht werden. Demgemäß wird eine solche Auswahl der Kaffeesorte oft noch als hinderlich empfunden.

Bei einer anderen bekannten Mahlvorrichtung für Kaffeebohnen mit einem über einem Mahlwerk angeordneten Vorratsbehälter, in dem mindestens zwei durch eine Trennwand getrennte Abteilungen zur Aufnahme unterschiedlicher Kaffeebohnen ausgebildet sind, ist eine Öffnung im Boden des Vorratsbehälters durch eine schwenkbare Klappe abgestuft verschließbar (EP-A-1 597 991). Die Öffnung erstreckt sich in beiden Abteilungen des Vorratsbehälters, und die schwenkbare Klappe ist bezüglich der Öffnung so angeordnet, dass sie die Zufuhr von Kaffeebohnen aus einem ausgewählten der beiden Abteilungen des Vorratsbehälters bewirken kann, indem die jeweils andere Abteilung verschlossen ist, oder aber es können beide Abteilungen geschlossen werden. Die Klappe ist im Einzelnen in einem Bodenbereich gekrümmt, mit Seitenwänden baggerschaufelähnlich ausgebildet und vorzugsweise in der Trennwand zwischen den Abteilungen des Vorratsbehälters mit einer Welle um eine waagerechte Schwenkachse schwenkbar gelagert. An der Trennwand sind weiterhin schräg nach unten verlaufende Wände angeformt, die verhindern sollen, dass ein Benutzer versehentlich in das Mahlwerk eingreift, die jedoch in Verbindung mit der Klappe die Gefahr des Einklemmens von Kaffeebohnen bei Schwenken der Klappe hervorrufen bzw. fördern, wenn die Klappe geschwenkt wird.

Bei einer anderen zum Stand der Technik gehörenden Kaffeemaschine, die eine Brühvorrichtung sowie eine Mahl- und Dosiervorrichtung umfasst, ist ein Behälter für die Kaffeebohnen durch eine Trennwand in zwei Abteile unterteilt, die unterschiedliche Sorten Kaffeebohnen aufnehmen können (EP-A-0 380 450). An einem Boden des Behälters ist in jedem der Abteile ein Schieber über eine zu der Mahl- und Dosiervorrichtung führenden Öffnung horizontal verschiebbar gelagert. Jeder der beiden Schieber steht über einen Winkelhebel mit einem Zugmagnet in Verbindung. Zur Auswahl einer Kaffeesorte ist einer der beiden Schieber durch Erwägen des zugehörigen Zugmagneten so zu verschieben, dass er die Öffnung zu der Mahl- und Dosiervorrichtung freigibt. Wenn die Öffnung durch den horizontal verschiebbaren Schieber wieder geschlossen wird, besteht die Möglichkeit des Verklemmens durch auf dem Schieber lagernde oder benachbarte Kaffeebohnen. Die horizontale Anordnung der Schieber, der Winkelhebel und der Zugmagnete beansprucht in der horizontalen Ebene verhältnismäßig viel Raum.

Es ist daher Aufgabe der vorliegenden Erfindung, einen Kaffeebohnenbehälter für eine Kaffeemühle der eingangs genannten Gattung zu schaffen, welche den vorgenannten Nachteilen abhilft und insbesondere geeignet ist, die Auswahl einer von mindestens zwei Kaffeebohnensorten in einer kompakten, störungsfrei ohne Klemmwirkung funktionierenden Ausbildung des Kaffeebohnenbehälters zu ermöglichen.

Diese Aufgabe wird durch die Kombination der in Anspruch 1 angegebenen Merkmale gelöst.

Durch die vertikal verschiebbare Führung und Einstellbarkeit je eines Verschlusselements in jeder der beiden Bohnenkammern, welches geeignet ist, je nach vertikaler Einstellung die Bohnenkammer in wesentlichen seitlich gegenüber einer Ausgangsöffnung zu einem Mahlwerk zu verschließen oder zu der Ausgabeöffnung freizugeben, kann der in einem üblichen Kaffeebohnenbehälter zur Verfügung stehende Raum ohne zusätzlich seitlich herausragende Teile gut genutzt werden, so dass der Kaffeebohnenbehälter kompakt sein kann. Infolge der vertikal verschiebbaren Anordnung der Verschlusselemente in jeder der beiden Bohnenkammern können allenfalls wenige Kaffeebohnen auf Oberseiten der Verschlusselemente aufliegen, die in einem umgebenden Kaffeevorrat in den Bohnenkammern leicht angehoben werden können. Infolge der Ausbildung der Einstellmittel und deren Verbindung mit den Verschlusselementen, so dass die Verschlusselemente zueinander gegenläufig vertikal einstellbar sind, kann der wechselseitige Verschluss je einer der beiden Bohnenkammern mit nur einer wenig belasteten Antriebsquelle, insbesondere manuell einhändig gewährleistet werden.

Die vertikale Verschiebbarkeit der Verschlusselemente ist auf die normale Aufstellung des Kaffeebohnenbehälters auf einer waagerechten Aufstellfläche bezogen. Sie verläuft somit orthogonal zu der waagerechten Aufstellfläche. Die waagerechte Aufstellfläche ist auch Bezugsebene für alle nachfolgenden Orientierungsangaben.

Zur zuverlässigen gegenläufigen Zwangssteuerung der beiden Verschlusselemente kann bevorzugt nach Anspruch 2 an jedem der Verschlusselemente eine Zahnstange fest angeordnet sein, wobei zwischen den Zahnstangen ein in beide Zahnstangen eingreifendes Zahnrad drehbar angeordnet ist, welches mit den Einstellmitteln in Verbindung steht.

Die Verschlusselemente sind bevorzugt nach Anspruch 3 plattenförmig ausgebildet und an die Form der Ausgabeöffnung angepasst, wobei zumindest je ein Abschnitt der Verschlusselemente in der Ausgabeöffnung vertikal verschoben werden kann. Durch die plattenförmige Ausbildung wird die kleine Auflagefläche für über dem Verschlusselement gelagerte Kaffeebohnen erreicht und gleichzeitig eine geringe Beeinträchtigung des freien Querschnitts der Ausgabeöffnung.

Wenn nach Anspruch 4 jeweils der in der Ausgabeöffnung verschiebbare Abschnitt des Verschlusselements einen oberen im Wesentlichen waagerechten Rand aufweist und jeweils einer der verschiebbaren Abschnitte der Verschlusselemente in Verschlussstellung in der Ausgabeöffnung absenkbar ist, so dass der obere waagerechte Rand des Abschnitts wenigstens bis zu einem oberen Rand der Ausgabeöffnung abgesenkt ist, wird ein seitlich ungehindertes Einströmen der Kaffeebohnen in die Ausgabeöffnung erreicht. Hierzu ist der Boden des Kaffeebohnenbehälters jeder Bohnenkammer wie üblich zu der Ausgabeöffnung geneigt. Außerdem wird durch diese Ausbildung und Anordnung der Verschlusselemente erreicht, dass das Klemmrisiko der Verschlusselemente in der Ausgabeöffnung besonders gering ist, da der verschiebbare Abschnitt jedes Verschlusselements sich ständig mehr oder weniger in der Ausgabeöffnung befindet, also das Verschlusselement nicht beim Absenken mit einer unteren Stirnseite aus der jeweiligen oberen Bohnenkammer über eine Kante der Ausgabeöffnung in diese eingeführt werden muss.

Gemäß Anspruch 5 kann sich an die Ausgabeöffnung des Kaffeebohnenbehälters nach unten ein Sockel anschließen, der mit der Wand des Kaffeebohnenbehälters einteilig ausgebildet sein kann, wobei zumindest Abschnitte der Verschlusselemente in dem Sockel vertikal verschiebbar sind. Die Verschlusselemente sind also in dem Sockel nach außen geschützt untergebracht und gegebenenfalls zusätzlich geführt.

Bei runder Ausbildung der Ausgabeöffnung nach Anspruch 6 sind die an die Kontur der Ausgabeöffnung angepassten Verschlusselemente im Wesentlichen als radikal geteilte hohle Halbzylinder geformt.

Eine leichte, aber steife Ausbildung der Verschlusselemente, die plattenförmig und an die Form der Ausgabeöffnung angepasst sind, wird erreicht, wenn die Verschlusselemente die Merkmale des Anspruchs 7 aufweisen. Durch die seitlichen vertikalen Stege des Verschlusselements wird der Zufluss der Kaffeebohnen in die Ausgabeöffnung kaum behindert, wenn das Verschlusselement bis zu beiden vertikalen Stegen in der Ausgabeöffnung abgesenkt ist, so dass der obere Rand der Ausgabeöffnung auf gleicher Höhe wie die Ausgabeöffnung oder tiefer liegt. Die versteifende Verbindungsbrücke zwischen den Stegen kann vorteilhaft eine Führungsfahne nach Anspruch 9 tragen, die mit einem Führungsrand als Führungselement dienen kann und auf der dem Führungsrand abgewandten Seite als Zahnstange ausgebildet sein kann, die zum Eingriff des einstellenden Zahnrads dient.

Die Führungsfahne wirkt bevorzugt mit jeweils einer der beiden vertikalen Führungsnuten zusammen, die innen in einer Abdeckkappe vorzugweise einander gegenüberliegend nach Anspruch 8 ausgeformt sind.

Die Abdeckkappe ist gemäß Anspruch 8 nach unten offen und in einem oberen Bereich des Kaffeebohnenbehälters angeordnet, um die Verschlusselemente und deren Einstellmittel vor Beschädigung zu schützen und das Bedienungspersonal zu sichern.

Die Erfindung ist vorteilhaft anwendbar bei Kaffeebohnenbehältern, in denen zwei benachbarte Bohnenkammern durch eine Trennwand getrennt sind, wobei sich die Ausgabeöffnung als gemeinsame Ausgabeöffnung der beiden Bohnenkammern in deren Böden erstreckt.

Gemäß Anspruch 11 kann zweckmäßig in der Trennwand das Zahnrad angeordnet sein, wobei jeweils auf einer der beiden Seiten der Trennwand eine der beiden Zahnstangen eingreift. Diese Anordnung ist kompakt und hat kurze Kraftübertragungswege zwischen den Zahnstangen, die zusammen mit dem Zahnrad zu den Einstellmitteln der Verschlusselemente gehören.

Zur einfachen manuellen Einstellung der Verschlusselemente, um jeweils eine Sorte Kaffeebohnen in einer der Bohnenkammern für den Mahlvorgang auszuwählen und in das Mahlwerk zu leiten, ist weiterhin gemäß Anspruch 12 eine in dem Kaffeebohnenbehälter drehbar gelagerte Schaltwelle mit dem Zahnrad verbunden und an einem aus dem Kaffeebohnenbehälter herausgeführten Ende der Schaltwelle mit einem Stellhebel verbunden. Mit dem Stellhebel kann das Zahnrad leicht einhändig verstellt werden.

Statt der manuellen Verstellung des Zahnrads kann dieses aber auch nach Anspruch 13 elektromotorisch verstellbar sein. Hierzu kann das Zahnrad beispielsweise an einen Getriebemotor gekuppelt sein, der durch Schaltkontakte bzw. über ein Steuergerät betätigt wird. Dabei kann für eine selbsttätige Endabschaltung der Einstellbewegung der Verschlusselemente vorgesehen sein.

Gemäß Anspruch 14 kann in einer Kaffeemaschine, insbesondere einem Espressovollautomat, mit integrierter Kaffeemühle mit einem Kaffeebohnenbehälter, der wie vorstehend beschrieben ausgebildet ist, die Ausgabeöffnung des Kaffeebohnenbehälters auf einem Mahlwerk-Einlaufschacht positioniert und fixiert werden, um die Vorteile dieses Kaffeebohnenbehälters zu nutzen.

In dem Fall, in dem das Mahlwerk der Kaffeemühle mit einem Mahlwerkeinlaufschacht versehen ist, können die Formgebung des Mahlwerkeinlaufschachts und des Sockels des Kaffeebohnenbehälters so aufeinander abgestimmt werden, dass die Verschlusselemente zwischen einer Innenwand des Sockels des Kaffeebohnenbehälters und einer Außenwand des Mahlwerkeinlaufschachts gemäß Anspruch 15 vertikal verschoben werden können und vorzugsweise zwischen dem Sockel des Kaffeebohnenbehälters und dem Mahlwerkeinlaufschacht gegebenenfalls zusätzlich zu der Führung an den Zahnstangen geführt werden.

Ein Ausführungsbeispiel der Erfindung wird nachfolgend anhand einer Zeichnung mit fünf Figuren beschrieben. Hieraus können sich weitere Einzelheiten der erfindungsgemäßen Gestaltung ergeben. Es zeigen:
- Figur 1: einen erfindungsgemäßen Kaffeebohnenbehälter in einer Seitenansicht, wobei die erfindungsgemäßen Merkmale bevorzugt aus den nachfolgenden Figuren hervorgehen,
- Figur 2: den Kaffeebohnenbehälter gemäß Figur 1 in einer Drauf- sicht und einem halbseitigen Schnitt C-C in Figur 3,
- Figur 3: den Kaffeebohnenbehälter gemäß den Figuren 1 und 2 im Wesentlichen in einem Schnitt in einer Ebene, in der die Linie A-A in Figur 2 liegt,
- Figur 4: den Kaffeebohnenbehälter gemäß den Figuren 1 - 3 in im Wesentlichen in einem Schnitt in einer Ebene, in der die Linie B-B in Figur 2 liegt, und
- Figur 5: eine Einzelheit des erfindungsgemäßen Kaffeebohnenbe- hälters in einer schaubildlichen Darstellung.

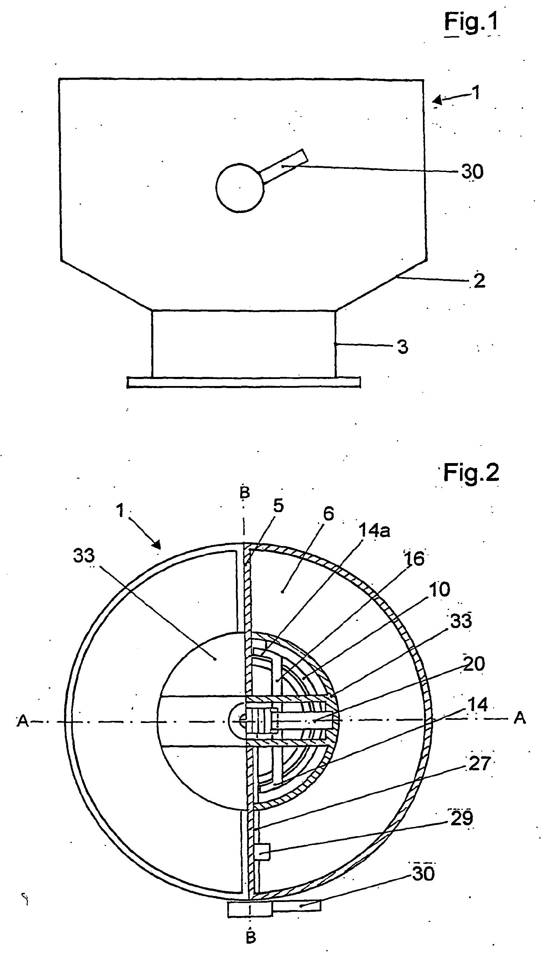

In den Figuren ist mit 1 ein Kaffeebohnenbehälter bezeichnet, der gemäß Figur 2 im Wesentlichen zylindrisch sein kann, aber auch anders, insbesondere annähernd quaderförmig, gestaltet sein kann. In einem unteren, konusförmigen Abschnitt 2 läuft der Kaffeebohnenbehälter nach unten zusammen zu einer Ausgabeöffnung 4 zusammen, an die sich nach unten ein unten offener Sockel 3 anschließt. Der Kaffeebohnenbehälter ist innen durch eine Trennwand 5 unterteilt, so dass in ihm zwei Bohnenkammern 6 und 7 gebildet werden, die beide an ihrem Boden in die Ausgabeöffnung 4 münden.

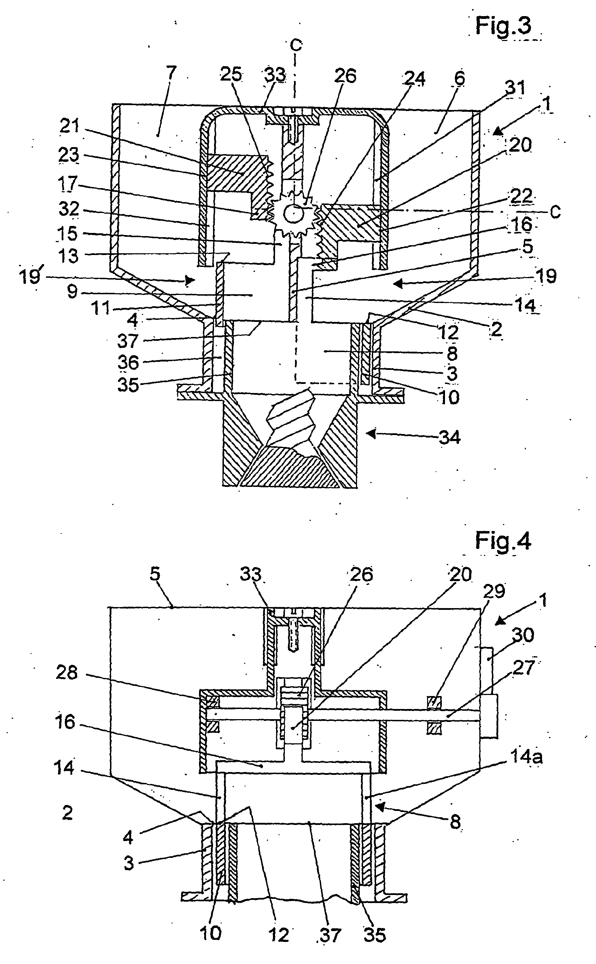

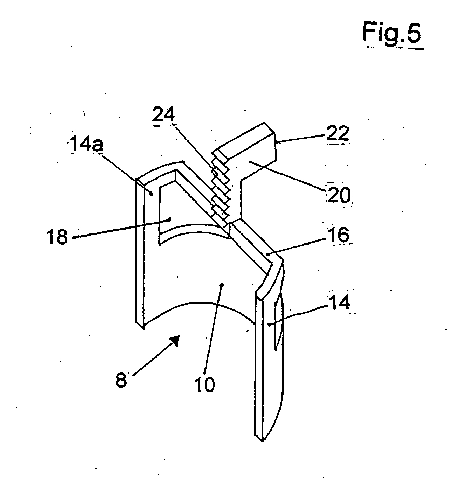

In jeder Bohnenkammer 6 bzw. 7 ist ein Verschlusselement 8 bzw. 9 vertikal verschiebbar angeordnet, welches jeweils einen unteren annähernd als vertikal geteilter hohler Halbzylinder geformten Abschnitt 10 bzw. 11 aufweist. Jeder der Abschnitte 10, 11 ist in die Ausgabeöffnung 4 absenkbar, wie mit dem Abschnitt 10 in Figur 3 gezeigt. Ein oberer Rand 12 bzw. 13 jedes als Hohlzylinder geformten Abschnitts 10 bzw. 11 ist seitlich durch zwei Stege, z.B. 14, 14a begrenzt, siehe Figur 5. Oben sind die beiden Stege jeweils durch eine Verbindungsbrücke 16 oder 17 miteinander verbunden. In Figur 3 sind die Verbindungsbrücken 16 und 17 durch unterbrochene Linien angedeutet. Bei jedem Verschlusselement 8 bzw. 9 wird zwischen dem oberen Rand 12 bzw. 13 des unteren Abschnitts 10 bzw. 11, den seitlichen Stegen, z.B. 14, 14a und der oberen Verbindungsbrücke 16 bzw. 17 eine Öffnung, z.B. 18 in Figur 5 gebildet, durch die im vertikal abgesenkten Zustand des Verschlusselements 10 bzw. 11 Kaffeebohnen aus einer der Bohnenkammern 6, 7 in die Ausgabeöffnung 4 und weiter nach unten rutschen bzw. fallen können. Der obere Rand 12 bzw. 13 des unteren als Halbzylinder geformten Abschnitts 10 bzw. 11 des Verschlusselements 8 bzw. 9 befindet sich in diesem geöffneten Zustand nicht höher als die Ausgabeöffnung 4.

Zum wechselseitigen Auf- und Abbewegen der beiden Verschlusselemente 8 und 9 ist jedes Verschlusselement mit einer Führungsfahne 20 bzw. 21 versehen, die in der Mitte jeweils einer Verbindungsbrücke 16 bzw. 17 angeordnet ist bzw. einstückig mit der Verbindungsbrücke ausgeformt ist. Die Führungsfahne weist jeweils einen Führungsrand 22 bzw. 23 und diesem gegenüber eine vertikal ausgeformte Zahnstange 24 bzw. 25 auf. In beide Zahnstangen 24, 25 greift ein in der Trennwand 5 zentral angeordnetes drehbares Zahnrad 26 ein. Das Zahnrad 26 ist mittels einer aus ihm herausgeführten Schaltwelle 27 in Lagern 28, 29 gelagert, die in der Trennwand 5 angeordnet sind, siehe Figur 4. Die Schaltwelle 27 ragt an einem Ende aus dem Kaffeebohnenbehälter 1 heraus und trägt an diesem Ende einen Stellhebel 30, mit dem die Schaltwelle manuell drehbar ist.

Die Führungsränder 22, 23 jeder Führungsfahne 20 bzw. 21 dienen zur Führung des Verschlusselements 8 bzw. 9 in jeweils einer Führungsnut 31 bzw. 32, die innen aus einer Abdeckhaube 33 ausgeformt sind, siehe Figur 3. Die nach unten offene Abdeckhaube 33 ist an der Trennwand 5 oben angeschraubt. Wie es sich aus der Zusammenschau der Figuren 3 und 4 ergibt, ist nur ein unterer Abschnitt der Abdeckkappe 33 als nach unten offener Hohlzylinder ausgebildet, während ein sich darüber befindlicher Abschnitt so schmal ist, dass sich das Zahnrad 26 in ihm ungehindert drehen kann. Durch den oberen schmalen Abschnitt der Abdeckkappe wird das Aufnahmevolumen der Bohnenkammern 6, 7 wenig beeinträchtigt und der Materialaufwand zur Herstellung der Abdeckkappe verringert.

In Figur 3 ist außer dem Kaffeebohnenbehälter ein Abschnitt einer Kaffeemühle dargestellt, die Bestandteil einer Kaffeemaschine sein kann, und zwar ein Mahlwerk 34 mit einem zylindrischen Einlaufschacht 35, der an den Sockel 3 des Kaffeebohnenbehälters angeflanscht werden kann. Eine nicht bezeichnete Außenwand des Einlaufschachts 35 ist so an eine ebenfalls nicht bezeichnete Innenwand des Sockels 3 angepasst, dass zwischen der Außenwand und der Innenwand ein freier Zwischenraum 36 bebildet wird, in dem die als Halbzylinder ausgeformten Abschnitte 10 und 11 wechselseitig abgesenkt werden können, siehe in Figur 3 den Abschnitt 10. Da der Sockel 3 und der Einlaufschacht 35 in ihrem Überlappungsbereich vorzugsweise zylindrisch sind, so ist auch der freie Zwischenraum 36 zylindrisch und somit auch an die Abschnitte 10 und 11 der Verschlusselement 8 und 9 angepasst. Der Einlaufschacht 35 ist so in den Sockel 3 des Kaffeebohnenbehälters 1 eingesetzt, dass sein oberer Rand 37 nicht über die Ausgabeöffnung 4 hinausragt.

Zur Auswahl einer Kaffeebohnensorte aus der Bohnenkammer 6 oder 7 wird der Stellhebel 30 so gedreht, dass das Verschlusselement 8 bzw. 9 den Zwischenraum 19 bzw. 19' zwischen der Abdeckkappe 33 und der Ausgabeöffnung 4 freigibt. In diesem Fall der Freigabe befindet sich die Öffnung, z.B. 18, des Verschlusselements neben dem genannten Zwischenraum 19 oder eine entsprechende nicht bezeichnete Öffnung des Verschlusselements 9 neben dem Zwischenraum 19'. Die Einstellung des Verschlusselements 8 bzw. 9 erfolgt gegenläufig mittels des in die beiden Zahnstangen 24, 25 eingreifenden Zahnrads 26. Bei der durch die Zahnraddrehung verursachten Auf- und Abbewegung der Verschlusselemente 8 und 9 werden diese in den Führungsnuten 31 bzw. 32 oben und in dem freien Zwischenraum 36 zwischen dem Einlaufschacht 35 und dem Sockel 3 unten geführt. In dem abgesenkten Zustand eines der Verschlusselemente, in den Figuren 3 und 4 des Verschlusselements 8, befindet sich der obere Rand 12 des Verschlusselementabschnitts zwischen den Stegen 14, 14a in Figur 5 auf gleicher Höhe oder tiefer wie bzw. als die Ausgabeöffnung 4 bzw. der obere Rand 37 des Einlaufschachts 35. Hingegen verschließt das Verschlusselement 9 die Bohnenkammer 7, in der es angehoben ist, wie Figur 3 gezeigt, indem der untere Abschnitt 11 des Verschlusselements 9, der die Form eines hohlen Halbzylinders hat, den Zwischenraum 19' zwischen der Abdeckkappe 33 und der Ausgabeöffnung 4. Dabei ist ein unterer nicht bezeichneter Rand des Abschnitts 11 des Verschlusselements 9 nicht in einem Abstand über die Ausgabeöffnung 4 angehoben, sondern kann noch in diese hineinragen, wie in Figur 3 dargestellt, so dass ein vollständiger Verschluss der Bohnenkammer 7 erzielt wird.

Das wechselseitige Öffnen und Schließen der Kammern 6 und 7, je nach Auswahl der Kaffeebohnensorte, kann somit durch einfache Einstellung des Zahnrads 26 erzielt werden.

### Bezugszahlenliste

- 1: Kaffeebohnenbehälter
- 2: konusförmiger Abschnitt
- 3: Sockel Kaffeebohnenbehälter
- 4: Ausgabeöffnung
- 5: Trennwand
- 6: Bohnenkammer
- 7: Bohnenkammer
- 8: Verschlusselement
- 9: Verschlusselement
- 10: Abschnitt des Verschlusselements (Halbzylinder)
- 11: Abschnitt des Verschlusselements (Halbzylinder)
- 12: oberer Rand Verschlusselementabschnitt
- 13: oberer Rand Verschlusselementabschnitt
- 14: Steg
- 14a: Steg
- 15: Steg
- 16: Verbindungsbrücke
- 17: Verbindungsbrücke
- 18: Öffnung des Verschlusselements 8
- 19: Zwischenraum Abdeckkappe/Ausgabeöffnung
- 19': Zwischenraum Abdeckkappe/Ausgabeöffnung
- 20: Führungselement (Führungsfahne)
- 21: Führungselement (Führungsfahne)
- 22: Führungsrand
- 23: Führungsrand
- 24: Zahnstange
- 25: Zahnstange
- 26: Zahnrad
- 27: Schaltwelle
- 28: Lager
- 29: Lager
- 30: Stellhebel
- 31: Führungsnut
- 32: Führungsnut
- 33: Abdeckkappe
- 34: Mahlwerk
- 35: Einlaufschacht
- 36: freier Zwischenraum
- 37: oberer Rand Einlaufschacht

## Patentansprüche

1. Kaffeebohnenbehälter für eine Kaffeemühle, mit zwei getrennten Bohnenkammern (6, 7) und wenigstens einer in deren Böden angeordneten Ausgabeöffnung (4), die mit mindestens einem Verschlusselement (8, 9) zu jeweils einer der Bohnenkammern (6, 7) verschließbar oder öffenbar ist, sowie mit Einstellmitteln (24 - 27, 30), mit denen das mindestens eine Verschlusselement (6, 7) einstellbar ist,
**dadurch gekennzeichnet,**
**dass** in jeder der beiden Bohnenkammern (6, 7) ein vertikal verschiebbar geführtes und einstellbares Verschlusselement (8 bzw. 9) angeordnet ist, welches geeignet ist, je nach vertikaler Einstellung die Bohnenkammer (6 bzw. 7) im Wesentlichen seitlich gegenüber der Ausgabeöffnung (4) zu verschließen oder zu der Ausgabeöffnung (4) freizugeben, und
**dass** die Einstellmittel (24 - 27, 30) derart ausgebildet sind und mit den Verschlusselementen (8, 9) in Verbindung stehen, dass diese zueinander gegenläufig vertikal einstellbar sind.

2. Kaffeebohnenbehälter nach Anspruch 1,
**dadurch gekennzeichnet,**
**dass** an jedem der Verschlusselemente (8, 9) je eine Zahnstange (24, 25) fest angeordnet ist, und
**dass** zwischen den Zahnstangen (24, 25) ein in beide Zahnstangen eingreifendes Zahnrad (26) drehbar angeordnet ist, welches mit den Einstellmitteln (24 - 27, 30) in Verbindung steht.

3. Kaffeebohnenbehälter nach Anspruch 1 oder 2,
**dadurch gekennzeichnet,**
**dass** die Verschlusselemente (8, 9) plattenförmig und an die Form der Ausgabeöffnung (4) angepasst sind und
**dass** zumindest je ein Abschnitt (10, 11) der Verschlusselemente (8, 9) in der Ausgabeöffnung (4) vertikal verschiebbar ist.

4. Kaffeebohnenbehälter nach Anspruch 3,
**dadurch gekennzeichnet,**
**dass** jeweils der in der Ausgabeöffnung (4) verschiebbare Abschnitt (10, 11) des Verschlusselements (8, 9) einen oberen im Wesentlichen waagerechten Rand (12) aufweist, und
**dass** jeweils einer der verschiebbaren Abschnitte (10, 11) der Verschlusselemente (8, 9) in Verschlussstellung in der Ausgabeöffnung (4) absenkbar ist, so dass der obere im Wesentlichen waagerechte Rand (12) des Abschnitts (10, 11) wenigstens bis zu einem oberen Rand der Ausgabeöffnung (4) abgesenkt ist.

5. Kaffeebohnenbehälter nach Anspruch 3 oder 4,
**dadurch gekennzeichnet,**
**dass** sich an die Ausgabeöffnung (4) nach unten ein Sockel (3) anschließt, in den die Verschlusselemente vertikal verschiebbar sind.

6. Kaffeebohnenbehälter nach einem der Ansprüche 3 - 5,
**dadurch gekennzeichnet,**
**dass** die Ausgabeöffnung (4) rund ist und
**dass** zumindest die in der Ausgabeöffnung (4) verschiebbaren Abschnitte (10, 11) der Verschlusselemente (8, 9) im Wesentlichen als vertikal geteilte hohle Halbzylinder geformt sind.

7. Kaffeebohnenbehälter nach einem der Ansprüche 4 bis 6,
**dadurch gekennzeichnet,**
**dass** der obere Rand (12) jedes der in der Ausgabeöffnung (4) verschiebbaren Abschnitte (10, 11) der Verschlusselemente (8, 9) zwischen seitlichen vertikalen Stegen (14, 15) je des Verschlusselements (8, 9) nach unten versetzt ist und
**dass** die Stege (14, 14a; 15) oben über je eine Verbindungsbrücke (16, 17) verbunden sind, so dass die Stege (14, 15), der obere Rand (12) und die Verbindungsbrücke (16, 17) jeweils eine Durchlassöffnung (18) begrenzen.

8. Kaffeebohnenbehälter nach einem der vorangehenden Ansprüche,
**dadurch gekennzeichnet,**
**dass** in einem oberen Bereich des Kaffeebohnenbehälters (1) eine nach unten offene Abdeckkappe (33) fest angeordnet ist,
**dass** die Abdeckkappe (33) innen zwei vertikale Führungsnuten (31, 32) aufweist, in die jeweils ein Führungselement (20, 21) jedes der Verschlusselemente (8, 9) eingreift.

9. Kaffeebohnenbehälter nach den Ansprüchen 7 und 8,
**dadurch gekennzeichnet,**
**dass** eine Führungsfahne mit einem Führungsrand (22, 23) als das Führungselement (20, 21) jeweils auf der Verbindungsbrücke (16, 17) des Verschlusselements (8, 9) angeordnet ist und
**dass** die Führungsfahne an einer dem Führungsrand (22, 23) abgewandten Seite als die Zahnstange (24, 25) der Einstellmittel (24 - 27, 30) ausgebildet ist.

10. Kaffeebohnenbehälter nach einem der vorangehenden Ansprüche,
**dadurch gekennzeichnet,**
**dass** die beiden benachbarten Bohnenkammern (6, 7) durch eine Trennwand (5) in dem Kaffeebohnenbehälter (1) getrennt sind und dass sich die Ausgabeöffnung (4) als gemeinsame Ausgabeöffnung der beiden Bohnenkammern (5, 6) in deren Böden erstreckt.

11. Kaffeebohnenbehälter nach einem der Ansprüche 2 - 10,
**dadurch gekennzeichnet,**
**dass** das Zahnrad (26) der Einstellmittel (24 - 27, 30) in der Trennwand (5) angeordnet ist.

12. Kaffeebohnenbehälter nach einem der Ansprüche 2 - 11,
**dadurch gekennzeichnet,**
**dass** eine in dem Kaffeebohnenbehälter (1) drehbar gelagerte Schaltwelle (27) mit dem Zahnrad (26) verbunden ist und
**dass** an einem aus dem Kaffeebohnenbehälter (1) herausgeführten Ende der Schaltwelle (27) ein Einstellhebel (30) angebracht ist.

13. Kaffeebohnenbehälter nach einem der Ansprüche 1 - 11,
**dadurch gekennzeichnet,**
**dass** das Zahnrad (26) elektromotorisch verstellbar ist.

14. Kaffeemaschine, insbesondere Espressovollautomat, mit integrierter Kaffeemühle mit einem Kaffeebohnenbehälter (1) nach einem der vorangehenden Ansprüche,
**dadurch gekennzeichnet,**
**dass** auf einem Mahlwerk-Einlaufschacht (35) der Kaffeemaschine die Ausgabeöffnung (4) des Kaffeebohnenbehälters (1) positionierbar und fixierbar ist.

15. Kaffeemaschine nach Anspruch 14 mit einem Kaffeebohnenbehälter nach einem der Ansprüche 5 - 13,
**dadurch gekennzeichnet,**
**dass** die Verschlusselemente (8, 9) zwischen einer Innenwand des Sockels (3) des Kaffeebohnenbehälters und einer Außenwand des Mahlwerk-Einlaufschachts (35) vertikal verschiebbar sind und vorzugsweise geführt sind.

## Claims

1. Coffee bean container for a coffee grinder comprising two separate bean chambers (6, 7) and at least one dispensing opening (4) provided in the bottoms thereof, said dispensing opening being lockable and openable by means of at least one locking element (8, 9) to one of said bean chambers (6, 7) each, and adjustment means (24 through 27, 30) by means of which said at least one locking element (8, 9) can be adjusted,
**characterized in**
**that** in each of said two bean chambers (6, 7) a vertically movably guided and adjustable locking element (8 or 9, respectively) is disposed which depending on the vertical adjustment is suited to either lock said bean chamber (6 or 7, respectively) essentially laterally relative to said dispensing opening (4) or to open it to said dispensing opening (4), and that said adjustment means (24 through 27, 30) are so formed and are connected in such a way with said locking elements (8, 9) that they can vertically be adjusted oppositely directed relative to each other.

2. Coffee bean container according to claim 1,
**characterized in**
**that** to each of said locking elements (8, 9) one toothed rack (24, 25) is solidly secured and
**that** between said toothed racks (24, 25), a toothed wheel (26) engaging in both toothed racks is pivotally disposed which is connected with said adjustment means (24 through 27, 30).

3. Coffee bean container according to claim 1 or 2,
**characterized in**
**that** said locking elements (8, 9) are plate-shaped and adapted to the shape of said dispensing opening (4), and
**that** at least one section (10, 11) each of said locking elements (8, 9) in said dispensing opening (4) is vertically movable.

4. Coffee bean container according to claim 3,
**characterized in**
**that** the respective section (10, 11) of said locking element (8, 9) which is movable in said dispensing opening (4) includes an upper substantially horizontal edge (12), and that one of said movable sections (10, 11) each of said locking elements (8, 9) can be lowered in the locking position in said dispensing opening (4) so that said substantially horizontal upper edge (12) of said section (10, 11) is lowered at least to an upper edge of said dispensing opening (4).

5. Coffee bean container according to claim 3 or 4,
**characterized in**
**that** said dispensing opening (4) passes over in the downward direction in a base (3) into which said locking elements can vertically be moved.

6. Coffee bean container according to one of claims 3 through 5,
**characterized in**
**that** said dispensing opening (4) is round and
**that** at least said sections (10, 11) of said locking elements (8, 9) movable in said dispense opening (4) are substantially shaped as vertically divided hollow semi cylinders.

7. Coffee bean container according to one of claims 4 through 6,
**characterized in**
**that** said upper edge (12) of each of said sections (10, 11) of said locking elements (8, 9) movable in said dispensing opening (4) is downwardly displaced between lateral vertical bars (14, 15) of each locking element (8, 9) and
**that** said bars (14, 14a; 15) are connected, above, by means of a connecting bridge (16, 17) each so that said bars (14, 15), said upper edge (12) and said connecting bridge (16, 17) define one passage opening (18) each.

8. Coffee bean container according to one of the foregoing claims,
**characterized in**
**that** in an upper area of said coffee bean container (1) a downwardly open covering cap (33) is solidly provided,
**that** said covering cap (33) includes, on its inner side, two vertical guide grooves (31, 32) into which engages one guide element (20, 21) each of said locking elements (8, 9) each.

9. Coffee bean container according to claims 7 through 8,
**characterized in**
**that** a guide blade having a guide edge (22, 23) is arranged as the respective guide element (20, 21) on said connecting bridge (16, 17) of said locking element (8, 9) and that said guide blade is formed out, on a side averted from said guide edge (22, 23), as the tooth rack (24, 25) of said adjustment means (24 through 27, 30).

10. Coffee bean container according to one of the forgoing claims,
**characterized in**
**that** the two adjacent bean chambers (6, 7) are separated from each other by a separating wall (5) in said coffee bean container (1) and that said dispensing opening (4) extends in the bottoms thereof as a common dispensing opening of the said two bean chambers.

11. Coffee bean container according to one of claims 2 through 10,
**characterized in**
**that** said toothed wheel (26) of said adjustment means (24 through 27, 30) is arranged in said separating wall (5).

12. Coffee bean container according to one of claims 2 through 11,
**characterized in**
**that** a control shaft (27) pivotally supported in said coffee bean container (1) is connected with said toothed wheel (26) and
**that** at one end of said control shaft (27) extended out of said coffee bean container (1) an adjustment lever is provided.

13. Coffee bean container according to one of claims 1 through 11,
**characterized in**
**that** said toothed wheel (26) can be adjusted by an electro motor.

14. Coffee machine, particularly fully automated espresso machine, with an integrated
coffee grinder including a coffee bean container (1) according to one of the foregoing claims,
**characterized in**
**that** said dispensing opening (4) of said coffee bean container (1) can be positioned and fixed in position on a grinder inflow chute (35) of said coffee machine.

15. Coffee machine according to claim 14 including a coffee bean container according to one of claims 5 through 13,
**characterized in**
**that** said locking elements (8, 9) are vertically movable, and preferably guided, between an interior wall of said base (3) of said coffee bean container and an outer wall of said grinder inflow chute (35).

## Revendications

1. Récipient à grains de café pour moulin à café, comprenant deux compartiments à grains de café (6, 7) séparés et au moins une ouverture de distribution (4) ménagée dans le fond de ceux-ci, qui peut être fermée ou ouverte au moyen d'au moins un élément de fermeture (8, 9) pour respectivement l'un des compartiments à grains de café (6, 7), ainsi que des moyens de réglage (24 - 27, 30) permettant le réglage du ou des éléments de fermeture (6, 7), au moins au nombre de un, **caractérisé en ce qu'**est disposé dans chacun des deux compartiments à grains de café (6, 7) un élément de fermeture (8 ou 9) guidé pour coulisser verticalement et réglable, qui est apte, en fonction du réglage vertical, à fermer le compartiment à grains de café (6 ou 7) sensiblement latéralement par rapport à l'ouverture de distribution (4) ou de le libérer vers l'ouverture de distribution (4), et
**en ce que** les moyens de réglage (24 - 27, 30) sont conçus et sont en liaison avec les éléments de fermeture (8, 9) de façon telle que ceux-ci sont réglables verticalement en sens opposé l'un par rapport à l'autre.

2. Récipient à grains de café selon la revendication 1, **caractérisé en ce qu'**au niveau de chacun des éléments de fermeture (8, 9) est disposée de façon fixe une crémaillère (24, 25), et
**en ce qu'**entre les crémaillères (24, 25) est montée de façon pivotante une roue dentée (26) s'engrenant dans les deux crémaillères, qui est en liaison avec les moyens de réglage (24 - 27, 30).

3. Récipient à grains de café selon la revendication 1 ou 2, **caractérisé**
**en ce que** les éléments de fermeture (8, 9) sont en forme de plaque et sont adaptés à la forme de l'ouverture de distribution (4), et
**en ce que** respectivement au moins un segment (10, 11) des éléments de fermeture (8, 9) est déplaçable verticalement dans l'ouverture de distribution (4).

4. Récipient à grains de café selon la revendication 3, **caractérisé en ce que** respectivement le segment (10, 11) de l'élément de fermeture (8, 9) déplaçable dans l'ouverture de distribution (4) présente un bord supérieur (12) sensiblement horizontal, et
**en ce que** respectivement l'un des segments (10, 11) déplaçables des éléments de fermeture (8, 9) peut être abaissé en position de fermeture dans l'ouverture de distribution (4) de façon telle que le bord supérieur (12) sensiblement horizontal du segment (10, 11) est abaissé au moins jusqu'à un bord supérieur de l'ouverture de distribution (4).

5. Récipient à grains de café selon la revendication 3 ou 4, **caractérisé en ce que** se raccorde à l'ouverture de sortie (4) vers le bas un socle (3) dans lequel les éléments de fermeture sont déplaçables verticalement.

6. Récipient à grains de café selon l'une des revendications 3 à S, **caractérisé**
**en ce que** l'ouverture de distribution (4) est circulaire, et
**en ce qu'**au moins les segments (10, 11) des éléments de fermeture (8, 9) déplaçables dans l'ouverture de distribution (4) ont sensiblement la forme de demi-cylindres creux divisés verticalement.

7. Récipient à grains de café selon l'une des revendications 4 à 6, **caractérisé**
**en ce que** le bord supérieur (12) de chacun des segments (10, 11) des éléments de fermeture (8, 9) déplaçables dans l'ouverture de distribution (4) est décalé vers le bas entre des tiges verticales latérales (14, 15) de l'élément de fermeture (8, 9) respectif, et
**en ce que** les tiges (14, 14a ; 15) sont reliées en haut respectivement par l'intermédiaire d'un pont de liaison (16, 17) de sorte que les tiges (14, 15), le bord supérieur (12) et le pont de liaison (16, 17) délimitent respectivement une ouverture de passage (18).

8. Récipient à grains de café selon l'une des revendications précédentes, **caractérisé**
**en ce que** dans une région supérieure du récipient à grains de café (1) est logé fixement un couvercle (33) ouvert vers le bas,
**en ce que** le couvercle (33) présente, à l'intérieur, deux rainures de guidage (31, 32) verticales dans lesquelles s'engage respectivement un élément de guidage (20, 21) de chacun des éléments de fermeture (8, 9).

9. Récipient à grains de café selon les revendications 7 et 8, **caractérisé**
**en ce qu'**une languette de guidage ayant un bord de guidage (22, 23) en tant qu'élément de guidage (20, 21) est disposée respectivement sur le pont de liaison (16, 17) de l'élément de fermeture (8, 9), et
**en ce que** la languette de guidage, sur un côté opposé au bord de guidage (22, 23), est conçue en tant que crémaillère (24, 25) des moyens de réglage (24 - 27, 30).

10. Récipient à grains de café selon l'une des revendications précédentes, **caractérisé**
**en ce que** les deux compartiments à grains de café (6, 7) adjacents sont séparés par une paroi de séparation (5) dans le récipient à grains de café (1), et
**en ce que** l'ouverture de distribution (4) s'étend, en tant qu'ouverture de distribution commune des deux compartiments à grains de café (5, 6), dans le fond de ceux-ci.

11. Récipient à grains de café selon l'une des revendications 2 à 10, **caractérisé en ce que** la roue dentée (26) des moyens de réglage (24 - 27, 30) est disposée dans la paroi de séparation (5).

12. Récipient à grains de café selon l'une des revendications 2 à 11, **caractérisé**
**en ce qu'**un arbre de commutation monté de façon à pivoter dans le récipient à grains de café (1) est relié à la roue dentée (26), et
**en ce qu'**à une extrémité de l'arbre de commutation (27) sortant du récipient à grains de café (1) est disposé un levier de réglage (30).

13. Récipient à grains de café selon l'une des revendications 1 à 11, **caractérisé en ce que** la roue dentée (26) est réglable par moteur électrique.

14. Machine à café, en particulier machine à café expresso entièrement automatique, avec moulin à café intégré comprenant un récipient à grains de café (1) selon l'une des revendications précédentes, **caractérisée en ce que** l'ouverture de distribution (4) du récipient à grains de café (1) peut être positionnée et fixée sur un compartiment d'entrée (35) du broyeur de la machine à café.

15. Machine à café selon la revendication 14 comprenant un récipient à grains de café selon l'une des revendications 5 à 13, **caractérisée en ce que** les éléments de fermeture (8, 9) sont déplaçables verticalement, et sont de préférence guidés, entre une paroi intérieure du socle (3) du récipient à grains de café et une paroi extérieure du compartiment d'entrée (35) du broyeur.
